# EUROPÄISCHE PATENTSCHRIFT

(11) **EP 0 523 277 B1**
(45) Veröffentlichungstag und Bekanntmachung des Hinweises auf die Patenterteilung: **06.12.1995**
(21) Anmeldenummer: 91112140.8
(22) Anmeldetag: 19.07.1991
(51) Int. Cl.: B62B 3/10

(54) **Transportfahrzeug, insbesondere für Einkaufswagen in Handelsgeschäften**
Transport vehicle, particularly for trolleys in shops
Véhicule de transport, particulièrement pour les chariots dans les magasins

(43) Veröffentlichungstag der Anmeldung: 20.01.1993
(73) Patentinhaber: LAFIS-LAGERTECHNIK FISCHER GMBH + CO. KG., D-46149 Oberhausen (DE)
(72) Erfinder: Fischer, Horst, W-4200 Oberhausen 11 (DE)
(74) Vertreter: Seibert, Hannelore

(56) Entgegenhaltungen:
- DE-A- 2 450 692
- DE-A- 3 823 377

## Beschreibung

Die Erfindung bezieht sich auf ein Transportfahrzeug für Einkaufswagen, mit einem in Aufsicht U-förmigen, einen Einkaufswagen umfassenden Grundrahmen und einem mittig im hinteren, querliegenden Antriebsteil gehalterten, einen integrierten Antrieb aufweisenden Antriebsrad.

Derartige Transportfahrzeuge sind beispielsweise aus der DE-OS 24 50 692 oder der DE-OS 38 23 377 bekannt. Diese Transportfahrzeuge weisen im vorderen, querliegenden Antriebsteil ein lenkbares Antriebsrad und am hinteren Ende zwei starr geführte Räder auf, um dem Fahrzeug die notwendige Stabilität zu geben. Diese Fahrzeuge können dabei von einer auf dem Fahrzeug sitzenden Person gelenkt und gesteuert werden. Es ist aber auch möglich, ein mit dem Antrieb über ein Kabel verbundenes Steuergerät zu verwenden, wobei dann aber das lenkbare Antriebsrad mit einem zusätzlichen, über elektrische Signale ansteuerbaren Lenkantrieb versehen sein muß.

Eine Lenkung vom Transportfahrzeug selbst aus ist nur bei dem Transport von nur wenigen, ineinandergeschobenen Einkaufswagen möglich, da sonst bei Schubbetrieb die Einkaufswagenschlange nicht mehr steuerbar ist. Bei einer Steuerung über Steuergerät und Verbindungskabel ist ein zusätzlicher, erheblicher Aufwand für den zusätzlichen gesonderten Lenkantrieb erforderlich. Außerdem erfordert die Steuerung im Schubbetrieb dabei ein erhebliches Geschick, um die Schlange in die richtige Bahn zu lenken.

Demgegenüber liegt der vorliegenden Erfindung die Aufgabe zugrunde, ein Transportfahrzeug der eingangs genannten Art zu schaffen, das sehr viel einfacher aufgebaut ist und unabhängig von der Länge der zu transportierenden Einkaufswagenschlange leicht und sicher gelenkt und gesteuert werden kann.

Zur Lösung dieser Aufgabe ist erfindungsgemäß vorgesehen, daß der U-förmige Grundrahmen in Höhe des unteren Rahmens des Einkaufswagens verläuft und diesen seitlich umfaßt und daß am freien Ende eines jeden Schenkels dieses Grundrahmens eine Lenkrolle schwenkbar befestigt und das Antriebsrad starr im Antriebsteil gehaltert ist.

Zweckmäßig ist es dabei, wenn seitlich vom oberen Ende des Antriebsteils den Korb eines Einkaufwagens umfassende und senkrecht oberhalb der Schenkel des Grundrahmens verlaufende Lenk- und Führungsarme ausgehen, an deren vorderen, freien Ende ein Lenkhandgriff und Steuerknöpfe für den Fahrantrieb angeordnet sind.

Dabei ist es zusätzlich oder allein auch möglich, daß ein mobiles Steuergerät mit einem Verbindungskabel vom Fahrantrieb von mindestens der Länge einer maximal zu transportierenden Reihe von ineinandergeschobenen Einkaufwagen zur Ansteuerung des Fahrantriebs vorgesehen ist und die Lenkung der Einkaufswagenschlange durch Handführung des ersten Wagens der Reihe erfolgt.

Mit einer solchen Gestaltung, nämlich einem starren Antriebsrad und schwenkbaren Lenkrollen an den Schenkeln des Grundrahmens, ist es möglich, das Transportfahrzeug allein von Hand am Ende eines der Lenkarme oder am vordersten Einkaufswagen der Schlange zu dirigieren und in die richtige Richtung zu lenken, wobei die Steuerknöpfe bzw. das Steuergerät den starren Fahrantrieb allein auf Vorwärts- oder Rückwärtsfahrt bzw. auf Stop schalten.

Zweckmäßigerweise ist dabei in das Antriebsteil eine Rückhol-Seiltrommel mit einem auf den Antriebsteil aufsteckbaren Befestigungshaken am vorderen Ende des Seils zum Einhaken am vordersten Einkaufswagen angeordnet.

Damit ist es möglich, mit dem Transportfahrzeug eine Reihe von Einkaufswagen nicht nur zu schieben, sondern auch in entgegengesetzter Richtung zu ziehen, da alle Einkaufswagen über das Seil an dem Transportfahrtzeug angekoppelt sind.

Schließlich ist es noch möglich, seitlich am Antriebsteil Ankopplungslaschen vorzusehen, um damit auf der Antriebsseite Reinigungsgeräte in Form von Kehrwalzen oder Schneepflügen anzukoppeln, wodurch eine weitere Verwendungsmöglichkeit eines derartigen Transportgerätes gegeben ist.

Anhand einer schematischen Zeichnung sind Aufbau und Funktionsweise eines Ausführungsbeispiels nach der Erfindung näher erläutert. Dabei zeigen
- Fig. 1: eine Seitenansicht eines derartigen Transportfahrzeuges und
- Fig. 2: eine Ansicht von oben auf dieses Transportfahrzeug.

Wie man aus der Zeichnung ersieht, weist das Transportfahrzeug einen U-förmigen Grundrahmen mit einem querliegenden kastenförmigen Antriebsteil 1 und zwei gabelförmig verlaufenden an den seitlichen unteren Kanten des Antriebsteils 1 angesetzten Schenkeln 2 und 3 auf. An den vorderen Enden dieser Schenkel 2 und 3 sind jeweils in schwenkbar an diese Schenkel 2 und 3 befestigte Halterungen 4 und 5 zwei Lenkrollen geführt, wovon nur die in der Seitenansicht vordere Lenkrolle 6 zu sehen ist. Am Antriebsteil 1 ist zur Rückseite hin das Antriebsrad 8 in einem dreieckigen Ansatz 9 starr gehaltert, wobei das Antriebsrad 8 einen integrierten, auf der Laufradwelle sitzenden Antrieb 10 aufweist.

An den oberen Seitenkanten des Antriebsteils 1 sind zwei schräg nach oben abragende Lenk- und Führungsarme 11 und 12 angeflanscht, die am vorderen Ende je einen Lenkbügel 13 bezw. 14 und Betätigungsknöpfe 15 und 16 bzw. 17 für den Fahrantrieb aufweisen.

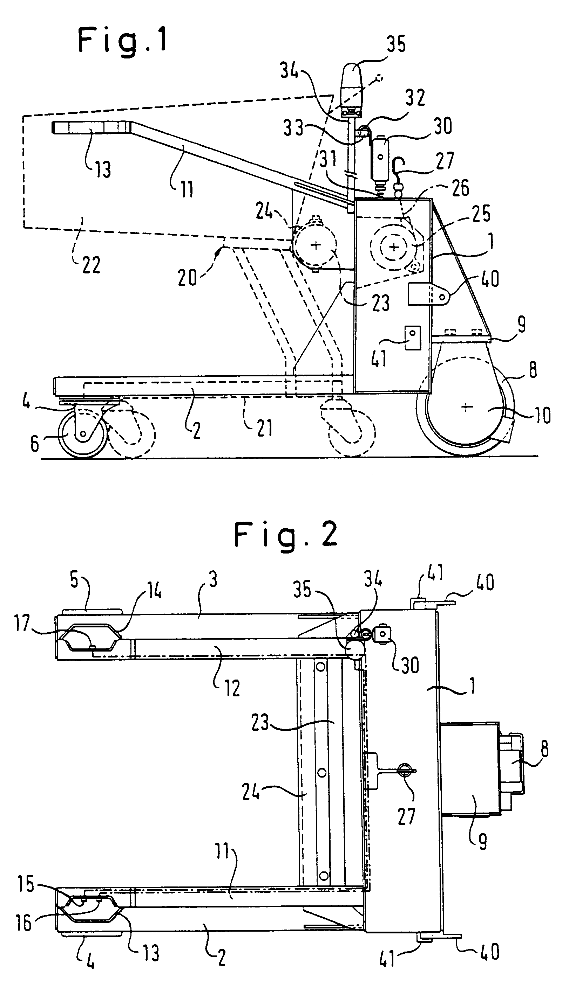

Wie man aus der Darstellung nach Fig. 1 ersieht, umfassen die unteren Schenkel 2 und 3 sowie die beiden oberen Lenk- und Führungsarme 11 und 12 einen gestrichelt eingezeichneten Einkaufswagen 20, einmal in Höhe des unteren Fahrwerkrahmens 21 und einmal in Höhe des Korbes 22.

Zur Abstützung gegenüber dieser Einkaufswagen 20 ist auf der Schubseite des Antriebsteils 1 in Höhe der Unterkante der Einkaufswagenkörbe 22 ein walzenförmiger Schubkörper 23 angeordnet, der auf seiner den Einkaufswagen 20 zugewandten Außenseite eine Polsterung 24 aufweist, um damit einen weichen Anschlag auf die Einkaufswagen 20 sicherzustellen.

Bei dem Transport einer geringeren Anzahl von ineinandergeschobenen Einkaufswagen 20 kann das Transportfahrzeug seitlich an einem der Handgriffe 13 und 14 angefaßt und gelenkt und über die Steuerknöpfe 15 und 16 bzw. 17 das Antriebsrad 8 auf Vorwärts- oder Rückwärtsfahrt angesteuert werden.

Um mit einer Gruppe von Einkaufswagen nicht nur in Schubrichtung, sondern auch in Zugrichtung fahren zu können, ist in das Antriebsteil 1 eine selbstaufrollende Seiltrommel 25 integriert, aus der ein Seil 26 mit einem Haken 27 am vorderen Ende auf der Oberseite des Antriebsteiles 1 festgelegt werden kann. Dieser Haken 27 kann dann in den vordersten der zu transportierenden Einkaufswagen eingehängt werden, wobei das Seil über die Seiltrommel 25 gespannt wird. Damit sind dann die Einkaufswagen fest an das Transportfahrzeug angekoppelt, so daß dieses auch in Zugrichtung fahren und die Einkaufswagen hinter sich herziehen kann.

Für den Transport einer langen Reihe ineinandergeschobener Einkaufswagen, deren Fahrtrichtung nicht mehr von den Lenkrahmen 11 oder 12 aus gesteuert werden kann, ist ein mobiles Steuergerät 30 vorgesehen, das über ein entsprechend langes Kabel 31 mit dem Antriebsteil 1 verbunden ist. Der Fahrer kann dann mit diesem Steuergerät 30 bis zum vorderen Ende der Einkaufswagenschlange vorgehen, über das Steuergerät 30 den Fahrantrieb ein- und ausschalten und mit Hand dann die Fahrtrichtung der Einkaufswagenschlange bestimmen. Damit ist es auf einfache Weise möglich, auch eine große Anzahl von ineinandergeschobener Einkaufswagen von nur einem Mann aus ohne große Kraftanstreungung zu transportieren und an den Bestimmungsort zu fahren.

Dieses Steuergerät 30 wird zweckmäßigerweise bei Nichtbenutzung über einen Haken 32 in eine Halterung 33 eingehängt, die seitlich am Antriebsteil 1 an einem Mast 34 befestigt ist, der am oberen Ende eine bei Fahrbetrieb blinkende Signallampe 35 trägt.

Seitlich am Antriebsteil 1 können darüber hinaus noch Laschen 40 bzw. 41 festgelegt sein, an die auf der Antriebsradseite laufende, nicht näher dargestellte Reinigungsgeräte in Form von Kehrwalzen oder Schneepflügen angekoppelt werden können. Diese Reinigungsgeräte können dann ebenfalls von den Lenkarmen 11 oder 12 bzw. den Handgriffen 13 oder 14 und den entsprechenden Steuerknöpfen 15 und 16 bzw. 17 gelenkt und gesteuert werden.

Damit ergibt sich also insgesamt ein universell verwendbares Transportfahrzeug, mit dem einmal Einkaufswagen auch in größerer Anzahl eingesammelt verfahren werden können, wobei ein Transport sowohl in Schub- als auch in Zugrichtung möglich ist und andererseits kann das Transportfahrzeug für weitere Anwendungen, wie beispielsweise als Kehrwalze oder Schneepflug herangezogen werden. Dabei ist der starr integrierte Antrieb besonders einfach aufgebaut, da eine Lenkung des Antriebsrades entfällt und das Fahrzeug nur durch Dirigieren der Lenkungsarme und Verdrehen der Lenkrollen bzw. In-Richtung-Lenken des vordersten Einkaufswagens gelenkt wird.

## Patentansprüche

1. Transportfahrzeug für Einkaufswagen, mit einem in Aufsicht U-förmigen, einen Einkaufswagen umfassenden Grundrahmen und einem mittig im hinteren, querliegenden Antriebsteil gehalterten, einen integrierten Antrieb aufweisenden Antriebsrad, dadurch gekennzeichnet, daß der U-förmige Grundrahmen (2, 3) in Höhe des unteren Rahmens (21) eines Einkaufswagens (20) verläuft und diesen seitlich umfaßt, und daß am freien Ende eines jeden Schenkels (2, 3) dieses Grundrahmens eine Lenkrolle (6) schwenkbar befestigt und das Antriebsrad (8) starr im Antriebsteil (9, 10) gehaltert ist.

2. Transportfahrzeug nach Anspruch 1, dadurch gekennzeichnet, daß seitlich vom oberen Ende des Antriebsteils (2) den Korb (22) eines Einkaufswagens (20) umfassende und senkrecht oberhalb der Schenkel (2, 3) des Grundrahmens verlaufende Lenk- und Führungsarme (11, 12) ausgehen, an deren vorderen, freien Enden ein Lenkhandgriff (13, 14) und Steuerknöpfe (15, 16; 17) für den Fahrantrieb (10) angeordnet sind.

3. Transportfahrzeug nach Anspruch 1 oder 2, dadurch gekennzeichnet, daß ein mobiles Steuergerät (30) mit einem Verbindungskabel vom Fahrantrieb (10) von min-destens der Länge einer maximal zu transportierenden Reihe von ineinandergeschobenen Einkaufswagen (20) zur Ansteuerung des Fahrantriebes (10) vorgesehen ist und die Lenkung der Einkaufswagenschlange durch Handführung des ersten Wagens erfolgt.

4. Transportfahrzeug nach Anspruch 1 oder 3, dadurch gekennzeichnet, daß in das Antriebsteil (1) eine Rückhol-Seiltrommel (25) mit einem auf den Antriebsteil (1) aufsteckbaren Befestigungshaken (27) am vorderen Ende des Seils (26) zum Einhaken am vordersten Einkaufswagen angeordnet ist.

5. Transportfahrzeug nach Anspruch 1 oder 2, dadurch gekennzeichnet, daß seitlich am Antriebsteil (1) Reinigungsgeräte in Form von Kehrwalzen oder Schneepflügen aufnehmende Ankopplungslaschen (40, 41) vorgesehen sind.

## Claims

1. Transport vehicle for shopping trolleys, having a base frame, which in plan view is U-shaped and embraces a shopping trolley, and a driving wheel which is held centrally in the rear, transverse drive part and has an integrated drive, characterized in that the U-shaped base frame (2, 3) extends at the height of the bottom frame (21) of a shopping trolley (20) and laterally embraces said bottom frame, and that a respective steering roller (6) is fastened to the free end of each limb (2, 3) of said base frame so as to be capable of swivelling and the driving wheel (8) is held rigidly in the drive part (9, 10).

2. Transport vehicle according to claim 1, characterized in that emanating laterally from the top end of the drive part (1) are steering and guide arms (11, 12) which embrace the basket (22) of a shopping trolley (20) and extend vertically above the limbs (2, 3) of the base frame and on whose front, free ends a steering handle (13, 14) and control buttons (15, 16; 17) for the travelling mechanism (10) are disposed.

3. Transport device according to claim 1 or 2, characterized in that a mobile control device (30), having a connection cable from the travelling mechanism (10) of at least the length of the maximum number of nested trolleys (20) to be transported, is provided for activating the travelling mechanism (10) and steering of the line of shopping trolleys is effected by manual guidance of the first trolley.

4. Transport vehicle according to claim 1 or 3, characterized in that disposed in the drive part (1) is a return motion cable drum (25) having at the front end of the cable (26) a fastening hook (27), which may be placed onto the drive part (1), for hooking onto the frontmost shopping trolley.

5. Transport vehicle according to claim 1 or 2, characterized in that coupling brackets (40, 41) for receiving cleaning devices in the form of sweeping cylinders or snow ploughs are provided laterally on the drive part (1).

## Revendications

1. Véhicule de transport pour chariots, comportant un cadre de base, qui a en vue de dessus une forme en U et qui encadre un chariot, une roue d'entraînement présentant un entraînement intégré, retenue au milieu dans l'élément d'entraînement postérieur à agencement transversal, caractérisé en ce que le cadre de base (2, 3) en forme de U s'étend au niveau du cadre (21) inférieur d'un chariot (20) et encadre celui-ci latéralement, et en ce qu'à l'extrémité libre de chaque montant (2, 3) de ce cadre de base un galet de direction (6) est fixé en pivotement, et la roue d'entraînement (8) est maintenue de manière rigide dans l'élément d'entraînement (9, 10).

2. Véhicule de transport selon la revendication 1, caractérisé en ce que des bras de guidage et de direction (11, 12), s'étendant verticalement au-dessus des montants (2, 3) du cadre de base et encadrant la corbeille (22) d'un chariot (20), partent latéralement depuis l'extrémité supérieure de l'élément d'entrânement (1), une poignée de guidage (13, 14) et des boutons de commande (15, 16 ; 17) pour l'organe de roulement (10) étant agencés sur les extrémités libres antérieures desdits bras.

3. Véhicule de transport selon l'une ou l'autre des revendications 1 et 2, caractérisé en ce qu'il est prévu un appareil de commande (30) mobile avec un câble de liaison à partir de l'organe de roulement (10), qui a au moins la longueur maximum d'une rangée de chariots (20) à transporter enfilés les uns dans les autres, pour piloter l'organe de roulement (10), et en ce que le guidage en direction de la file de chariots est faite en menant à la main le premier chariot.

4. Véhicule de transport selon l'une ou l'autre des revendications 1 et 3, caractérisé en ce que dans l'élément d'entraînement (1) est agencé un tambour (25) à câble de rappel comportant sur l'extrémité antérieure du câble (26) un crochet (27) de fixation enfichable sur l'élément d'entraînement (1), destiné à être accroché sur le chariot situé en tête.

5. Véhicule de transport selon l'une ou l'autre des revendications 1 et 2, caractérisé en ce que des pattes d'accouplement (40, 41) sont prévues latéralement sur l'élément d'entraînement (1) pour recevoir des appareils de nettoyage sous forme de rouleaux de balayage ou de chasse-neige.
